(19) Europäisches Patentamt
European Patent Office
Office européen des brevets

(11) **EP 2 238 665 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(21) Anmeldenummer: **09705952.1**

(22) Anmeldetag: **28.01.2009**

(51) Int Cl.:
***H02J 3/46*** (2006.01)     ***F03D 9/00*** (2006.01)

(86) Internationale Anmeldenummer:
**PCT/EP2009/050952**

(87) Internationale Veröffentlichungsnummer:
**WO 2009/095412 (06.08.2009 Gazette 2009/32)**

(54) **VERFAHREN ZUM BETREIBEN EINER WINDENERGIEANLAGE**

METHOD FOR OPERATING A WIND TURBINE

PROCÉDÉ PERMETTANT DE FAIRE FONCTIONNER UNE ÉOLIENNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **01.02.2008 DE 102008007448**

(43) Veröffentlichungstag der Anmeldung:
**13.10.2010 Patentblatt 2010/41**

(73) Patentinhaber: **Woodward Kempen GmbH**
**47906 Kempen (DE)**

(72) Erfinder:
• **ENGELHARDT, Stephan**
**47665 Sonsbeck (DE)**
• **GENIUSZ, Andrzej**
**45473 Mülheim an der Ruhr (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
**DE-A1- 10 019 362      US-A1- 2003 151 259**
**US-A1- 2005 042 098**

**Beschreibung**

Die Erfindung betrifft ein Verfahren zum Betreiben einer Windenergieanlage mit einer Generatoreinrichtung zum Abgeben elektrischer Energie an ein Netz, wobei die Generatoreinrichtung einen Stator umfasst, und einer Steuerungseinrichtung zur Steuerung der Generatoreinrichtung, wobei zumindest mit einer ersten Messvorrichtung eine Statorspannung der Generatoreinrichtung gemessen wird, und zumindest mit einer zweiten Messvorrichtung ein an das Netz abgegebener Netzstrom gemessen wird. Daneben betrifft die Erfindung ein Computerprogramm sowie ein Computerprogrammprodukt zur Durchführung des Verfahrens unter Verwendung eines Prozessors sowie eine Steuerungseinrichtung einer Generatoreinrichtung einer Windenergieanlage und eine Windenergieanlage.

Es ist ein stetiges Anliegen, die Abgabe von Wirkleistung einer Windenergieanlage an ein Netz zu optimieren und Beeinträchtigungen sowohl des Netzes als auch der Windenergieanlage zu vermeiden. Insbesondere kann bei einem Spannungseinbruch die von der Windenenergieanlage abgegebene Wirkleistung die maximal an das Netz abgebbare Wirkleistung übersteigen. Dies kann zu einer Instabilität der Generatoreinrichtung der Windenergieanlage führen. Wird die Generatoreinrichtung instabil hat dies zur Folge, dass die Windenergieanlage abgeschaltet werden muss, um Beschädigungen der Windenergieanlage zu vermeiden.

Aus der Druckschrift EP 1 040 564 B1 ist ein Verfahren zum Betreiben einer Windenergieanlage zur Vermeidung von unerwünschten Änderungen der Netzspannung bekannt, um eine ansonsten erforderliche Deaktivierung der Windenergieanlage zu vermeiden. Hierbei umfasst die Windenergieanlage einen Spannungsaufnehmer zum Aufnehmen einer an einem elektrischen Netz anliegenden elektrischen Spannung. Wenn die Netzspannung größer oder kleiner als ein vorbestimmter Netzspannungswert ist, kann die Windenergieanlage ohne Leistungsabgabe an das elektrische Netz betrieben werden. Nachteilig an diesem Verfahren zum Betreiben einer Windenergieanlage ist jedoch, dass dieses Verfahren zum Schutz des Netzes, nicht jedoch zum Schutz der Windenergieanlage ausgelegt ist. Ebenso ist es wünschenswert die Windenergieanlage auch bei starken Änderungen der Netzspannung nicht ohne Leistungsabgabe betreiben zu müssen und gleichzeitig einen ausreichenden Schutz der Windenergieanlage gewährleisten zu können.

Darüber hinaus ist aus der Druckschriften DE 100 19 362 A1 ein Verfahren zum Betreiben einer Windenergieanlage bekannt, bei welchem aus netzseitig gemessenen Strom- und Spannungswerten die abgegebene Wirkleistung ermittelt und zur Korrektur der Generator-Wirkleistung verwendet wird. Ferner soll durch Variation des Phasenwinkels zwischen Strom und Spannung des netzseitigen Wechselrichters Blindleistung erzeugt werden und gleichzeitig der Gesamtstrom in zulässigen Grenzen gehalten werden. Eine Bestimmung der maximal abgebaren Wirkleistung unter Berücksichtigung eines vorgegebenen maximalen Phasenwinkels zwischen Stator- und Netzspannung sowie die Regelung der Wirkleistungsabgabe unter Berücksichtigung der Sollwirkleistungsabgabe und der maximal abgebaren Wirkleistung ist nicht vorgesehen.

Weitere Verfahren zum Betreiben von Windenergieanlagen sind aus der US 2005/0042098 A1 sowie der US 2003/0151259 A1 bekannt.

Von diesem Stand der Technik ausgehend liegt der vorliegenden Erfindung die Aufgabe zugrunde, ein gattungsgemäßes Verfahren zum Betreiben einer Windenergieanlage zur Verfügung zu stellen, dass einen zuverlässigen Betrieb der Windenergieanlage bei Schwankungen der Netzspannung gewährleistet und gleichzeitig einen zuverlässigen Schutz der Windenergieanlage gegenüber Beschädigungen ermöglicht, ohne dass eine Abschaltung der Windenergieanlage notwendig ist.

Die oben aufgezeigte Aufgabe wird gemäß einer ersten Lehre der vorliegenden Erfindung durch ein gattungsgemäßes Verfahren dadurch gelöst, dass zumindest in Abhängigkeit der Statorspannung und des Netzstromes mit einem Netzmodell eine Netzspannung ermittelt wird, aus der ermittelten Netzspannung und einem vorgebbaren, zwischen Statorspannung und Netzspannung bestehenden, maximalen Phasenwinkel die maximal abgebbare Wirkleistung der Windenergieanlage ermittelt wird, und die abgegebene Wirkleistung in Abhängigkeit der ermittelten maximal abgebbaren Wirkleistung und einer von der Steuerungseinrichtung vorgegebenen Sollwirkleistung geregelt wird.

Im Gegensatz zu bekannten Verfahren zielt das erfindungsgemäße Verfahren auf den Schutz der Windenergieanlage ab, indem dieses instabile Zustände der Windenergieanlage vermeidet. Durch die Bestimmung der Netzspannung und durch den vorgebbaren, zwischen Statorspannung und Netzspannung bestehenden, maximalen Phasenwinkel kann die von der Generatoreinrichtung an ein Netz maximal abgebbare Wirkleistung bestimmt werden, welche noch einen stabilen Betrieb der Windenergieanlage ermöglicht. Folglich kann die tatsächlich abgegebene Wirkleistung in Abhängigkeit der maximal abgebbaren Wirkleistung geregelt werden und kritische Betriebssituation vermieden werden, ohne dass ein Leerlaufbetrieb oder eine Deaktivierung der Windenergieanlage erforderlich ist.

Gemäß einer ersten erfindungsgemäßen Ausgestaltung kann die ermittelte maximal abgebbare Wirkleistung mit der vorgegebenen Sollwirkleistung verglichen werden und bei einem Überschreiten der maximal abgebbaren Wirkleistung durch die Sollwirkleistung die Sollwirkleistung auf die maximal abgebbare Wirkleistung begrenzt werden. Andernfalls wird die Sollwirkleistung an das Netz abgegeben. Es ist erkannt worden, dass instabile Betriebssituationen hervorgerufen durch einen Spannungsabfall im Netz besonders einfach vermieden werden können, wenn die abgegebene Sollwirkleistung bei einer kleineren maximal abgebbaren Wirkleistung auf die maximal abgebbare Wirkleistung begrenzt wird. Durch eine Reduzierung der tatsächlich abgegebenen Wirkleistung kann eine unerwünschte Beschleunigung der Generatoreinrichtung vermieden werden. Die Windenergieanlage kann weiterhin in einem stabilen Arbeitspunkt betrieben werden und eine Deaktivierung der Windenergieanlage kann vermieden werden.

Darüber hinaus kann die maximal abgebbare Wirkleistung gemäß einem weiteren Ausführungsbeispiel der vorliegenden Erfindung kontinuierlich, periodisch und/oder einmalig ermittelt werden. Bei Netzen, deren Leistung annähernd konstant ist und ein Spannungseinbruch unwahrscheinlich erscheint, kann die maximal abgebbare Wirkleistung einmalig, beispielsweise bei Inbetriebnahme der Windenergieanlage, bestimmt werden. Hierdurch kann der Rechenaufwand zur Bestimmung der maximal abgebbaren Wirkleistung reduziert werden. Eine höhere Sicherheit kann durch eine periodische oder, falls erforderlich, kontinuierliche Bestimmung der maximal abgebbaren Wirkleistung erzielt werden, um auch auf relativ plötzliche Spannungseinbrüche angemessen reagieren und insbesondere die abgegebene Sollwirkleistung ausreichend schnell auf die maximal abgebbare Wirkleistung beschränken zu können.

Die für die Bestimmung der maximal abgebbaren Wirkleistung verwendete Netzspannung kann gemäß einer nächsten Ausgestaltung des erfindungsgemäßen Verfahrens aus der Statorspannung, dem Netzstrom und einer Netzimpedanz berechnet werden. Durch die Verwendung dieser Parameter zur Bestimmung der Netzspannung kann die Netzspannung ohne eine ansonsten erforderliche Messung der Netzspannung, die mit einem hohen Aufwand verbunden wäre, in einfacher Weise bestimmt werden.

Um exakte Werte der Netzimpedanz zu erhalten, kann die Netzimpedanz aus zumindest zwei zu verschiedenen Zeitpunkten gemessenen Statorspannungen und aus zumindest zwei zu verschiedenen Zeitpunkten gemessenen Netzströmen berechnet werden. Die Bestimmung der Netzimpedanz umfassend einen Real- und einen Imaginärteil kann durch zwei Messungen sowohl der Statorspannung als auch des Netzstromes in einfacher Weise aus den daraus folgenden zwei Gleichungen durchgeführt werden. Zur Messung können geeignete Messvorrichtungen und zur Bestimmung der Netzimpedanz geeignete Verarbeitungsmittel in der Steuerungseinrichtung vorgesehen sein.

Die Netzimpedanz kann kontinuierlich, periodisch und/oder einmalig ermittelt werden. Insbesondere in Netzen, die eine nahezu konstante Netzimpedanz ohne wesentliche Veränderungen aufweisen, kann die Netzimpedanz zur Reduzierung von Berechnungszeit einmalig, zum Beispiel bei Inbetriebnahme der Windenergieanlage, ermittelt werden. Für Netze, bei denen die Netzimpedanz variieren kann, kann es von Vorteil sein, die Netzimpedanz periodisch, bei sich schnell ändernden Netzimpedanzen auch kontinuierlich zu ermitteln, um Änderung der Netzimpedanzen in die Berechnung der maximal abgebbaren Wirkleistung einzubeziehen. Die Genauigkeit des Netzmodells und der auf dem Netzmodell basierenden Parameterbestimmungen kann verbessert werden einhergehend mit einer Verbesserung der Sicherheit der Windenergieanlage.

Es ist erkannt worden, dass durch eine geeignete Wahl des maximalen Phasenwinkels zwischen Statorspannung und der Netzspannung ein ausreichender Anlagenschutz erzielt werden kann. Der maximale Phasenwinkel zwischen Statorspannung und der Netzspannung kann auf kleiner oder gleich 85°, vorzugsweise kleiner oder gleich 70° gemäß einer nächsten Ausgestaltung des erfindungsgemäßen Verfahrens festgelegt werden. Der für die theoretisch maximal abgebbare Wirkleistung erforderliche und maximal mögliche Phasenwinkel beträgt 90°. Um jedoch ausreichende Sicherheitsreserven in Hinblick auf einen stabilen Betrieb der Windenergieanlage, der nur bei Phasenwinkeln kleiner als 90° möglich ist, zu erhalten, ist eine Festlegung des Phasenwinkels auf zumindest kleiner oder gleich 85° vorteilhaft, wobei ein maximaler Phasenwinkel von kleiner oder gleich 70° größere Sicherheitsreserven zur Verfügung stellt.

Gemäß einem weiteren Ausführungsbeispiel der vorliegenden Erfindung kann eine doppeltgespeiste Asynchronmaschine verwendet werden. Doppeltgespeiste Asynchronmaschinen eignen sich insbesondere für einen Einsatz als Generatoreinrichtung in einer Windenergieanlage.

Gemäß einer zweiten Lehre der vorliegenden Erfindung wird die oben aufgezeigte Aufgabe durch ein Computerprogramm mit Befehlen, deren Ausführung einen Prozessor veranlasst, das erfindungsgemäße Verfahren durchzuführen, gelöst. Gleiches gilt auch für ein Computerprogrammprodukt, das ein Computerprogramm enthält mit Befehlen, deren Ausführung einen Prozessor veranlasst, das erfindungsgemäße Verfahren durchzuführen. Hinsichtlich der Vorteile des erfindungsgemäßen Computerprogramms bzw. Computerprogrammprodukts wird auf die Beschreibung des erfindungsgemäßen Verfahrens verwiesen.

Die oben aufgezeigte Aufgabe wird gemäß einer weiteren Lehre der vorliegenden Erfindung durch eine Steuerungseinrichtung einer Generatoreinrichtung einer Windenergieanlage gelöst, wobei die Steuerungseinrichtung Mittel zur Steuerung der Wirkleistungsabgabe der Generatoreinrichtung an ein Netz gemäß dem erfindungsgemäßen Verfahren umfasst. Die erfindungsgemäße Steuerungseinrichtung erlaubt den Betrieb einer Generatoreinrichtung einer Windenergieanlage und verhindert kritische Betriebssituationen, insbesondere eine Instabilität der Generatoreinrichtung, und eine damit verbundene erforderliche Deaktivierung der Windenergieanlage. Darüber hinaus kann eine Leistungsabgabe auch bei starken Netzspannungsschwankungen gewährleistet werden.

Gleiches gilt schließlich auch für eine Windenergieanlage umfassend eine Generatoreinrichtung sowie eine erfindungsgemäße Steuerungseinrichtung. Die erfindungsgemäße Windenergieanlage eignet sich besonders zum Betreiben von "schwachen" Netzen oder mit einer schwachen Netzanbindung. Dies trifft beispielsweise für Windenergieanlagen in Offshore Windparks zu.

Es gibt nun eine Vielzahl von Möglichkeiten, das erfindungsgemäße Verfahren, die Steuerungseinrichtung sowie die Windenergieanlage auszugestalten und weiterzubilden. Hierzu wird einerseits verwiesen auf die dem Patentanspruch 1 nachgeordneten Patentansprüche und andererseits auf die Beschreibung von Ausführungsbeispielen in Verbindung mit der Zeichnung. In der Zeichnung zeigt

Fig. 1     eine schematische Darstellung eines Ausführungsbeispiels einer erfindungsgemäßen Windenergieanlage,

Fig. 2     ein Flussdiagramm eines Ausführungsbeispiels gemäß dem erfindungsgemäßen Verfahren sowie

Fig. 3     ein Leistungskennliniendiagramm eines Ausführungsbeispiels gemäß dem erfindungsgemäßen Verfahren.

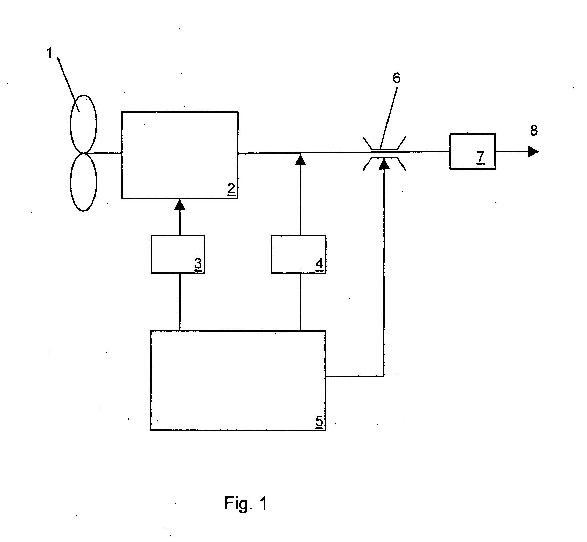

Figur 1 zeigt zunächst eine schematische Darstellung eines Ausführungsbeispiels einer erfindungsgemäßen Windenergieanlage. Der dargestellte Rotor 1 ist dazu vorgesehen, die Generatoreinrichtung 2 anzutreiben. Als Generatoreinrichtung 2 kann vorteilhafterweise eine doppeltgespeiste Asynchronmaschine eingesetzt werden. Die Generatoreinrichtung 2 kann Wirkleistung an ein Netz 8 mit einer Netzimpedanz 7 abgeben. Der an das Netz 8 abgegebene Netzstrom kann durch eine zweite Messvorrichtung 4 ermittelt werden. Darüber hinaus kann mittels einer ersten Messvorrichtung 3 eine Statorspannung der Generatoreinrichtung 2 erfasst werden. Die erfassten Werte sowohl der Statorspannung als auch die des an das Netz 8 abgegebenen Netzstroms können in einem geeigneten Format, beispielsweise als analoge oder digitale Daten, an eine Steuerungseinrichtung 5 übertragen werden. Die Steuerungseinrichtung 5 kann geeignete Mittel zur Verarbeitung der erfassten Daten gemäß dem vorliegenden Verfahren aufweisen, wobei insbesondere eine digitale Verarbeitung möglich sein kann. Ferner ist die Steuerungseinrichtung 5 geeignet, eine Begrenzereinrichtung 6 anzusteuern, um die tatsächlich abgegebene Wirkleistung, falls erforderlich, zu begrenzen.

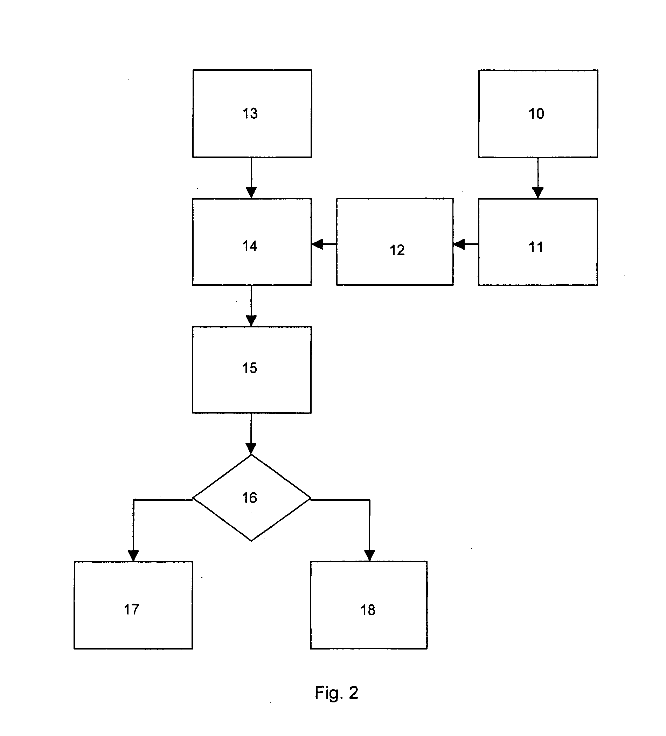

Die Funktionsweise eines Ausführungsbeispiels gemäß dem erfindungsgemäßen Verfahren wird anhand des vereinfachten, in Figur 2 dargestellten, Flussdiagramms erläutert. Zur Regelung der tatsächlich abgegebenen Wirkleistung ist es zunächst erforderlich, Parameter eines Netzmodells zu bestimmen. Es ist aber auch denkbar, die Netzimpedanz fest vorzugeben. Insbesondere kann zunächst die Netzimpedanz $Z_N$ bestimmt werden. In einem ersten Schritt 10 können die Statorspannung $\underline{U}_{S1}$ und der an das Netz 8 abgegebene Netzstrom $I_{N1}$ durch die vorgesehenen Messvorrichtungen 3, 4 erfasst werden. Die Erfassung dieser Messwerte erfolgt zu einem ersten Arbeitszeitpunkt $t_1$. Es versteht sich, dass dieser Schritt auch in zwei separaten Schritten durchgeführt werden kann. Zu einem zweiten Arbeitszeitpunkt $t_2$ kann in einem zweiten Schritt 11 eine zweite Messung der Statorspannung $\underline{U}_{S2}$ und der abgegebene Netzstrom $I_{N2}$ durch die vorgesehenen Messvorrichtungen 3, 4 durchgeführt werden. Die erfassten Messwerte können an die Steuerungseinrichtung 5 zur weiteren Verarbeitung übertragen werden. In einem nächsten Schrott 12 können die gesuchten Größen $R_N$ und $X_N$ der Netzimpedanz $Z_N$ mittels geeigneter Verarbeitungsmittel der Steuerungseinrichtung 5 wie folgt berechnet werden. Geht man von der allgemeinen Gleichung

$$\underline{U}_Q = \underline{U}_S - Z_N \underline{I}_N , \quad \text{mit} \quad Z_N = R_N + jX_N \qquad (a)$$

für eine Quellenspannung $\underline{U}_Q$ aus, so erhält man für die beiden Arbeitszeitpunkte $t_1$ und $t_2$ folgende zwei Gleichungen

$$\underline{U}_{Q1} = \underline{U}_{S1} - (R_{N1} + jX_{N1})\underline{I}_{N1} , \qquad (b)$$

$$\underline{U}_{Q2} = \underline{U}_{S2} - (R_{N2} + jX_{N2})\underline{I}_{N2} . \qquad (c)$$

Darüber hinaus kann davon ausgegangen werden, dass sich die Quellenspannung $\underline{U}_Q$ innerhalb einer hinreichend kleinen Zeitspanne zwischen dem ersten Arbeitszeitpunkt $t_1$ und dem zweiten Arbeitszeitpunkt $t_2$ annähernd konstant und somit auch die Komponenten $R_N$ und $X_N$ nahezu konstant bleiben. Folglich können die obigen Gleichungen vereinfacht werden und es ergeben sich die Gleichungen

$$\underline{U}_Q = \underline{U}_{S1} - (R_N + jX_N)\underline{I}_{N1} \, , \qquad\qquad (d)$$

$$\underline{U}_Q = \underline{U}_{S2} - (R_N + jX_N)\underline{I}_{N2} \, . \qquad\qquad (e)$$

Durch Subtraktion beider Gleichungen (d) und (e) ergibt sich die Gleichung

$$0 = \underline{U}_{S1} - \underline{U}_{S2} - (R_N + jX_N)(\underline{I}_{N1} - \underline{I}_{N2}) \, . \qquad\qquad (f)$$

Aus der Gleichung (f) erhält man durch Zerlegung der Gleichung (f) in Real- sowie Imaginärteil zwei Gleichungen mit zwei Unbekannten $R_N$ und $X_N$. Durch Lösen dieser Gleichungen können die gesuchten Komponenten $R_N$ und $X_N$ bestimmt werden. Die Verfahrensschritte 10 bis 12 können einmalig, zum Beispiel bei der Inbetriebnahme der Windkraftanlage, insbesondere dann erfolgen, wenn davon auszugehen ist, dass die Netzimpedanz $Z_N$ ausreichend konstant bleibt. Darüber hinaus kann es vorteilhaft sein, die Netzimpedanz $Z_N$ auch periodisch oder kontinuierlich zu bestimmen. Änderungen der Netzimpedanz $Z_N$ können erfasst und im Netzmodell berücksichtigt werden, insbesondere unmittelbar nach ihrer Entstehung. Die
Berechnungen können mit geeigneten Verarbeitungsmitteln, wie einem Mikroprozessor oder dergleichen, in der
Steuerungseinheit 5 durchgeführt werden. Es versteht sich, dass gemäß anderen Varianten der Erfindung, die Schritte 10 bis 12 auch entfallen und die Netzimpedanz $Z_N$ durch Schätzung oder Ableitung aus bekannten Netzimpedanzwerten vergleichbarer Netze fest bestimmt werden kann.
Wenn nun die Parameter $R_N$ und $X_N$ des Netzmodells bestimmt sind, kann in einem Schritt 13 die Statorspannung $\underline{U}_S$ und der abgegebene Netzstrom $\underline{I}_N$ durch die vorgesehenen Messvorrichtungen 3, 4 erfasst werden. Es ist auch möglich, dass auf die bereits erfassten Messwerte zur Bestimmung des Netzmodells zurückgegriffen wird. Im nächsten Schritt 14 wird durch die in der Steuerungseinrichtung 5 vorgesehenen Verarbeitungsmittel zumindest aus der gemessenen Statorspannung $\underline{U}_S$ und aus dem an das Netz 8 abgegebenen Netzstrom $\underline{I}_N$ mittels des Netzmodells die Netzspannung $\underline{U}_N$ ermittelt. Insbesondere kann die Netzspannung $\underline{U}_N$ nach folgender Gleichung berechnet werden

$$\underline{U}_N = \underline{U}_S - \underline{I}_N(R_N + jX_N) \, . \qquad\qquad (g)$$

Im folgenden Schritt 15 wird die abgebbare maximale Wirkleistung $P_{max}$ bestimmt. Im Allgemeinen ergibt sich die an das Netz 8 abgebbare Wirkleistung $P$ aus der Gleichung

$$P = |\underline{U}_N| |\underline{U}_S| \frac{1}{|R_N + jX_N|} \sin(\delta) \, , \qquad\qquad (h)$$

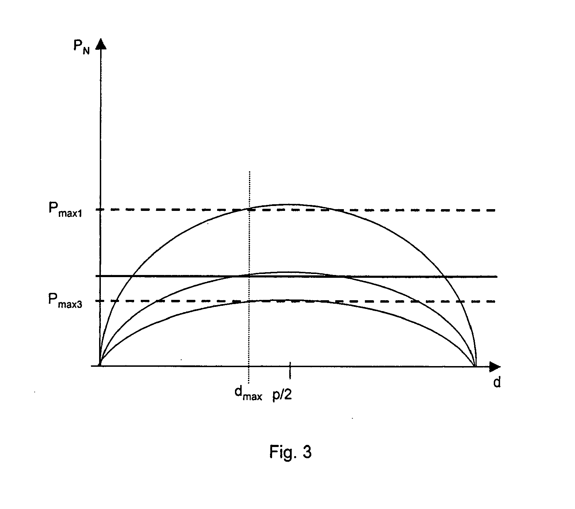

wobei $\delta$ der Phasenwinkel zwischen der Statorspannung $\underline{U}_S$ und der Netzspannung $\underline{U}_N$ ist. Erfindungsgemäß wird aus Sicherheitsgründen, insbesondere zum Schutz der Windenergieanlage bei Netzschwankungen, ein maximaler zwischen Statorspannung $\underline{U}_S$ und der Netzspannung $\underline{U}_N$ liegender Phasenwinkel $\delta_{max}$ vorgegeben. Vorzugsweise ist der maximale Phasenwinkel $\delta_{max}$ zwischen Statorspannung $\underline{U}_S$ und der Netzspannung $\underline{U}_N$ kleiner oder gleich 85°, insbesondere kleiner oder gleich 70°, um noch Sicherheitsreserven für Regelschwankungen zur Verfügung zu stellen.
Zur Verdeutlichung der Beziehung zwischen abgebbarer Wirkleistung $P$ und Phasenwinkel $\delta$ wird in Figur 3 ein beispielhaftes Leistungskennliniendiagramm eines Ausführungsbeispiels gemäß des erfindungsgemäßen Verfahrens gezeigt. Wie aus den Leistungskennlinien aus Figur 3 deutlich wird, ergibt sich die theoretisch maximal abgebbare Wirkleistung für einen Phasenwinkel $\delta = \pi/2$ *bzw.* 90°. Größere Phasenwinkel $\delta$ führen aber zu einer Beschleunigung der Generatoreinrichtung 2 und somit zu einer Instabilität der Generatoreinrichtung 2. In einem solchen Fall wäre die Abschaltung der Windenergieanlage erforderlich, um Beschädigungen der Windenenergieanlage zu vermeiden. Folglich sollten größere Phasenwinkel δ unbedingt vermieden werden. Vorsorglich sollte ein Sicherheitsabstand zum Phasenwinkel δ = π/2 *bzw.* 90° eingehalten werden, wobei sich ein maximaler Phasenwinkel $\delta_{max}$ von 70° als besonders geeignet herausgestellt hat.

Wieder bezugnehmend auf das in Figur 2 dargestellte Flussdiagramm, wird in dem Schritt 15 die maximal abgebbare Wirkleistung $P_{max}$ nach folgender Gleichung durch geeignete Verarbeitungsmittel der Steuerungseinrichtung 5 berechnet

$$P_{max} = |\underline{U}_N||\underline{U}_S|\frac{1}{|R_N + jX_N|}\sin(\delta_{max}) \ . \qquad (i)$$

Die Bestimmung der maximal abgebbaren Wirkleistung $P_{max}$ kann kontinuierlich, periodisch und/oder einmalig durchgeführt werden. Hierbei kann beispielsweise berücksichtigt werden, wie hoch die Wahrscheinlichkeit von Netzschwankungen ist, wie groß diese Netzschwankungen sein können, wie groß die zur Verfügung stehende Rechenleistung ist oder ob ein größtmöglicher Schutz der Windenergieanlage erreicht werden soll.

In dem darauf folgenden Schritt 16 wird die ermittelte maximal abgebbare Wirkleistung $P_{max}$ mit einer Sollwirkleistung $P_{soll}$, die von der Steuerungseinrichtung 5 vorgegebenen wird, verglichen. Die Sollwirkleistung $P_{soll}$ kann beispielsweise in Abhängigkeit von Systemvoraussetzungen, wie der Leistungsfähigkeit der Windenergieanlage, vorgegeben werden. Weiterhin kann die Sollwirkleistung während des Betriebes der Windenergieanlage verändert, beispielsweise der Windgeschwindigkeit angepasst werden. Bei einem Vergleich in Schritt 16 sind drei verschiedene Fälle möglich. Die Sollwirkleistung $P_{soll}$ kann kleiner als die maximal abgebbare Wirkleistung $P_{max}$, gleich der maximal abgebbaren Wirkleistung $P_{max}$ oder größer als die maximal abgebbare Wirkleistung $P_{max}$ sein.

Anhand der Leistungskennlinien aus Figur 3 werden die drei Fälle im Folgenden erläutert. Der erste betrachtete Fall ist der, dass in Abhängigkeit des maximalen Phasenwinkels $\delta_{max}$ die maximal abgebbare Wirkleistung $P_{max1}$ bestimmt worden ist. Wie Figur 3 zu entnehmen ist, ist die abgebbare maximale Wirkleistung $P_{max1}$ größer als die vorgegebene Sollwirkleistung $P_{soll}$. In diesem Fall wird durch die Generatoreinrichtung 2 die Sollwirkleistung $P_{soll}$ an das Netz 8 abgegeben (Schritt 17). Für den Fall, dass die bestimmte maximal abgebbare Wirkleistung $P_{max2}$ gleich der vorgegebenen Sollwirkleistung $P_{soll}$ ist kann ebenfalls mit Schritt 17 fortgefahren werden. Die Sollwirkleistung $P_{soll}$ wird auch in diesem Fall an das Netz 8 abgegeben.

Im dritten Fall ist die ermittelte maximal abgebbare Wirkleistung $P_{max3}$ kleiner als die vorgegebene Sollwirkleistung $P_{soll}$. Dieser Fall kann beispielsweise durch einen Spannungsabfall im Netz 8 auftreten. Würde die Generatoreinrichtung 2 in diesem Fall versuchen, die Sollwirkleistung $P_{soll}$ an das Netz 8 abzugeben, so könnte die Generatoreinrichtung 2 instabil werden und eine Abschaltung der Generatoreinrichtung 2 erforderlich sein, um eine Beschädigung der Windenergieanlage zu vermeiden. Um diese Auswirkungen zu verhindern, wird die abgegebene Wirkleistung P auf die maximal abgebbare Wirkleistung $P_{max3}$ begrenzt (Schritt 18). Beispielsweise kann die Steuerungseinrichtung 5 die Begrenzungseinrichtung 6 entsprechend ansteuern und die tatsächlich abgegebene Wirkleistung P auf die maximal abgebbare Wirkleistung $P_{max3}$ begrenzen. Es versteht sich hierbei, dass die tatsächlich abgegebene Wirkleistung P wieder auf die Sollwirkleistung $P_{soll}$ geregelt werden kann, wenn die maximal abgebbare Wirkleistung $P_{max}$ zumindest wieder auf die Sollwirkleistung $P_{soll}$ gestiegen ist.

## Patentansprüche

1. Verfahren zum Betreiben einer Windenergieanlage mit einer Generatoreinrichtung (2) zum Abgeben elektrischer Energie an ein Netz (8), wobei die Generatoreinrichtung einen Stator umfasst, und einer Steuerungseinrichtung (5) zur Steuerung der Generatoreinrichtung, wobei zumindest mit einer ersten Messvorrichtung (3) eine Statorspannung der Generatoreinrichtung gemessen wird, und zumindest mit einer zweiten Messvorrichtung (4) ein an das Netz abgegebener Netzstrom gemessen wird (13),
**dadurch gekennzeichnet, dass** zumindest in Abhängigkeit der Statorspannung und des Netzstromes mit einem Netzmodell (10, 11, 12) eine Netzspannung ermittelt wird (13), aus der ermittelten Netzspannung und einem vorgebbaren, zwischen Statorspannung und Netzspannung bestehenden, maximalen Phasenwinkel die maximal abgebbare Wirkleistung der Windenergieanlage ermittelt wird (15), und die abgegebene Wirkleistung in Abhängigkeit der ermittelten maximal abgebbaren Wirkleistung und einer von der Steuerungseinrichtung vorgegebenen Sollwirkleistung geregelt wird (16, 17, 18).

**2.** Verfahren nach Anspruch 1,
**dadurch gekennzeichnet, dass** die ermittelte maximal abgebbare Wirkleistung mit der vorgegebenen Sollwirkleistung verglichen wird und bei einem Überschreiten der maximal abgebbaren Wirkleistung durch die Sollwirkleistung die Sollwirkleistung auf die maximal abgebbare Wirkleistung begrenzt wird.

**3.** Verfahren nach einem der Ansprüche 1 oder 2,
**dadurch gekennzeichnet, dass** die maximal abgebbare Wirkleistung kontinuierlich, periodisch und/oder einmalig ermittelt wird.

**4.** Verfahren nach einem der Ansprüche 1 bis 3,
**dadurch gekennzeichnet, dass** die Netzspannung aus der Statorspannung, dem Netzstrom und einer Netzimpedanz berechnet wird.

**5.** Verfahren nach Anspruch 4,
**dadurch gekennzeichnet, dass** die Netzimpedanz aus zumindest zwei zu verschiedenen Zeitpunkten gemessenen Statorspannungen und aus zumindest zwei zu verschiedenen Zeitpunkten gemessenen Netzströmen berechnet wird.

**6.** Verfahren nach Anspruch 5,
**dadurch gekennzeichnet, dass** die Netzimpedanz kontinuierlich, periodisch und/oder einmalig ermittelt wird.

**7.** Verfahren nach einem der Ansprüche 1 bis 6,
**dadurch gekennzeichnet, dass** der maximale Phasenwinkel ($\delta_{max}$) zwischen Statorspannung und der Netzspannung auf kleiner oder gleich 85°, vorzugsweise kleiner oder gleich 70° festgelegt wird.

**8.** Verfahren nach einem der Ansprüche 1 bis 7,
**dadurch gekennzeichnet, dass** eine doppeltgespeiste Asynchronmaschine verwendet wird.

**9.** Computerprogramm mit Befehlen, deren Ausführung einen Prozessor veranlasst, das Verfahren gemäß einem der Ansprüche 1 bis 8 durchzuführen.

**10.** Computerprogrammprodukt, das ein Computerprogramm enthält mit Befehlen, deren Ausführung einen Prozessor veranlasst, dass Verfahren gemäß einem der Ansprüche 1 bis 8 durchzuführen.

**11.** Steuerungseinrichtung (5) einer Generatoreinrichtung (2) einer Windenergieanlage, wobei die Steuerungseinrichtung Mittel zur Steuerung der Wirkleistungsabgabe der Generatoreinrichtung an ein Netz gemäß einem Verfahren nach Anspruch 1 bis 8 umfasst.

**12.** Windenergieanlage umfassend eine Generatoreinrichtung sowie eine Steuerungseinrichtung gemäß Anspruch 11.

**Claims**

**1.** Method for operating a wind energy plant having a generator device (2) for outputting electrical energy to a grid (8), wherein the generator device comprises a stator, and having a control device (5) for controlling the generator device, wherein a stator voltage of the generator device is measured at least with one first measuring device (3), and a grid current output to the grid is measured (13) at least with one second measuring device (4), **characterised in that** a grid voltage is determined (13) using a grid model (10, 11, 12) at least as a function of the stator voltage and the grid current, the maximum effective power of the wind energy plant that can be output is determined (15) from the determined grid voltage and a pre-determinable maximum phase angle existing between stator voltage and grid voltage, and the output effective power is controlled (16, 17, 18) as a function of the determined maximum effective power that can be output and a target effective power pre-determined by the control device.

**2.** Method according to Claim 1, **characterised in that** the determined maximum effective power that can be output is compared to the pre-determined target effective power and when the maximum effective power that can be output is exceeded by the target effective power the target effective power is restricted to the maximum effective power that can be output.

**3.** Method according to Claim 1 or 2, **characterised in that** the maximum effective power that can be output is determined continuously, periodically and/or once.

**4.** Method according to any one of Claims 1 to 3, **characterised in that** the grid voltage is calculated from the stator voltage, the grid current and a grid impedance.

**5.** Method according to Claim 4, **characterised in that** the grid impedance is calculated from at least two stator voltages measured at different points in time and from at least two grid currents measured at different points in time.

**6.** Method according to Claim 5, **characterised in that** the grid impedance is determined continuously, periodically and/or once.

**7.** Method according to any one of Claims 1 to 6, **characterised in that** the maximum phase angle ($\delta_{max}$) between the stator voltage and the grid voltage is set to less than or equal to 85°, preferably less than or equal to 70°.

**8.** Method according to any one of Claims 1 to 7, **characterised in that** a double-fed asynchronous machine is used.

**9.** Computer program with commands, the execution of which causes a processor to carry out the method according to any one of Claims 1 to 8.

**10.** Computer program product which contains a computer program with commands, the execution of which causes a processor to carry out the method according to any one of Claims 1 to 8.

**11.** Control device (5) of a generator device (2) of a wind energy plant, wherein the control device comprises means for controlling the effective power output from the generator device to a grid according to a method according to any one of Claims 1 to 8.

**12.** Wind energy plant comprising a generator device and a control device according to Claim 11.

**Revendications**

**1.** Procédé pour faire fonctionner une éolienne avec un dispositif de générateur (2) pour fournir de l'énergie électrique à un réseau (8), dans lequel le dispositif de générateur comprend un stator, et avec un dispositif de pilotage (5) pour piloter le dispositif de générateur, dans lequel une tension de stator du dispositif de générateur est mesurée par au moins un premier dispositif de mesure (3) et un courant de réseau fourni au réseau est mesuré (13) par au moins un second dispositif de mesure (4), **caractérisé en ce que**
au moins en fonction de la tension de stator et du courant de réseau, l' on détermine (13) une tension de réseau avec un modèle de réseau (10, 11, 12), **en ce que** l'on détermine (15) la puissance active qui peut être fournie au maximum par l'éolienne à partir de la tension de réseau détectée et d'un angle de phase maximal prédéfinissable existant entre la tension de stator et la tension de réseau et **en ce que** la puissance active fournie est réglée (16, 17, 18) en fonction de la puissance active détectée qui peut être fournie au maximum et d'une puissance active de consigne prédéfinie par le dispositif de pilotage.

**2.** Procédé selon la revendication 1,
**caractérisé en ce que**
la puissance active détectée qui peut être fournie au maximum est comparée à la puissance active de consigne prédéfinie et **en ce que** lorsque la puissance active de consigne dépasse la puissance active qui peut être fournie au maximum, la puissance active de consigne est limitée à la puissance active qui peut être fournie au maximum.

**3.** Procédé selon l'une quelconque des revendications 1 ou 2,
**caractérisé en ce que**
la puissance active qui peut être fournie au maximum est détectée en continu, périodiquement et/ou une seule fois.

**4.** Procédé selon l'une quelconque des revendications 1 à 3,
**caractérisé en ce que**
la tension de réseau est calculée à partir de la tension de stator, du courant de réseau et d'une impédance de réseau.

**5.** Procédé selon la revendication 4,
**caractérisé en ce que**
l'impédance de réseau est calculée à partir d'au moins deux tensions de stator mesurées à des moments différents et à partir d'au moins deux courants de réseau mesurés à des moments différents.

**6.** Procédé selon la revendication 5,
**caractérisé en ce que**
l'impédance de réseau est détectée en continu, périodiquement et/ou seule fois.

**7.** Procédé selon l'une quelconque des revendications 1 à 6,
**caractérisé en ce que**
l'angle de phase maximal ($\delta_{max.}$) entre la tension de stator et la tension de réseau est fixé à une valeur inférieure ou égale à 85 °, de préférence à une valeur inférieure ou égale à 70 °.

**8.** Procédé selon l'une quelconque des revendications 1 à 7,
**caractérisé en ce que**
l'on utilise une machine asynchrone à double alimentation.

**9.** Logiciel informatique avec des commandes, dont l'exécution a pour conséquence qu'un processeur met en oeuvre le procédé selon l'une quelconque des revendications 1 à 8.

**10.** Produit de logiciel informatique, qui contient un logiciel informatique avec des commandes, dont l'exécution a pour conséquence qu'un processeur met en oeuvre le procédé selon l'une quelconque des revendications 1 à 8.

**11.** Dispositif de pilotage (5) d'un dispositif de générateur (2) d'une éolienne, dans lequel le dispositif de pilotage comprend des moyens pour piloter la puissance active du dispositif de générateur qui est fournie à un réseau d'après un procédé selon l'une quelconque des revendications 1 à 8.

**12.** Eolienne, comprenant un dispositif de générateur et un dispositif de pilotage selon la revendication 11.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1040564 B1
- DE 10019362 A1
- US 20050042098 A1
- US 20030151259 A1